# EUROPEAN PATENT APPLICATION

(11) **EP 3 488 686 A1**
(43) Date of publication of application: **29.05.2019**
(21) Application number: 17203131.2
(22) Date of filing: 22.11.2017
(51) Int. Cl.: A01G 23/08, G06Q 10/04, G06Q 50/02

(54) **FORESTRY MACHINERY OPERATION METHOD AND OPERATION PROCESSOR PERFORMING THIS METHOD**

(71) Applicant: Deere & Company, Moline, IL 61265 (US)
(72) Inventor: Kaarnametsä, Johannes, 68163 Mannheim (DE); Putkonen, Aki, 68163 Mannheim (DE); Siltanen, Vesa, 68163 Mannheim (DE)
(74) Representative: John Deere GmbH & Co. KG

(57) **Abstract**

A forestry machinery operation method for forestry machines 12 uses worksite preparation data 14 and navigation data 16 to prepare the forestry machine 12 for operation and worksite situation data 8 to adjust the forestry machine 12 on the worksite 10.

## Description

This invention relates to a forestry machinery operation method and to an operation processor performing this method.

Harvesting, transporting and processing trees and logs is influenced by a plurality of factors, which factors may be anticipated, since they are known from a worksite and the work paths, or may become known during the machinery operation only.

The problem this invention is based on is seen in the need to optimize the operation of the machines involved.

This problem is solved in an innovative way by means of the teaching of claim 1, whereas advantageous features further developing the invention are given in the claims related to claim 1.

By means of this teaching optimization can be reached at different levels. E.g., in fleets the best suitable machines are selected or equipment is set and/or selected to meet best the anticipated demands. Accordingly forestry machines of a certain hp level, transmission, wheel or track composition, size of a boom or harvester head are selected or in a fleet - in particular an autonomous fleet - are sent to operation. Navigation data enable to consider the steepness of a track, the maximum size and load permissible of a bridge to be passed, the height, under a bridge, when forestry machines and equipment is selected or set. Worksite situation data do the fine tuning and adjustments to the local situation, which for example may find muddy ground, although the weather forecast predicts dry ground. All this information is used to prepare the machines before a situation is recognized late and operation cannot be performed or at a poor level.

Forestry, terrain and soil data are known from sources like drones, satellites, forest officers, long term growth data, visual data from machines, which operated on a worksite earlier, LIDAR data etc. If e.g. it has been observed, that trees to be harvested on average are small or thick, a harvester head capacity, boom lift capacity, saw power capacity can be predicted and a machine can be sent to the forest, which is ready to work as opposed to the use of a wrong harvester head or a too light or heavy machine. At the same time an over performing machine and related fuel consumption can be avoided as well.

A tree with an abnormally thick branch may cause damage on a head or heat up hydraulic oil, if knives are not closed enough and/or valves are not set properly. Worksite situation data provide for the right setting before such a thick branch is hit. In case of thin branches, knives may be more open and hydraulic pressure will be lower, both reducing power and fuel consumption. Navigation data may help in identifying areas in the forest with certain branch types, like in dark or light portions of the forest.

Not only power related settings may be impacted - also production settings, like the length of the logs to be cut may be fixed and adjusted depending on expectations at a certain area and findings in the actual situation. E.g., portions of a tree, like bends, many branches, Y-sections etc. recognized on a tree may be used to adjust the production settings.

In order to avoid stalling an engine or wheels/tracks spinning on the ground, navigation data, worksite preparation data from weather forecast and worksite situation data about ground conditions may be used to increase/decrease engine and/or vehicle speed such, that a hill can be mastered by the forestry machine without problem and without excessive wear at the wheels or tracks and at optimized fuel consumption.

It depends on the operator, forest owner, weather conditions, environmental demands, etc. which of quality, quantity, wear, etc. will get priority when operating the machine. This prioritization may change during the operation and may not be limited to one criteria only.

In the following, one embodiment of the invention is described in more detail and in relation to the drawing. It is shown in:
- Fig. 1: a worksite in a forest in schematic view and

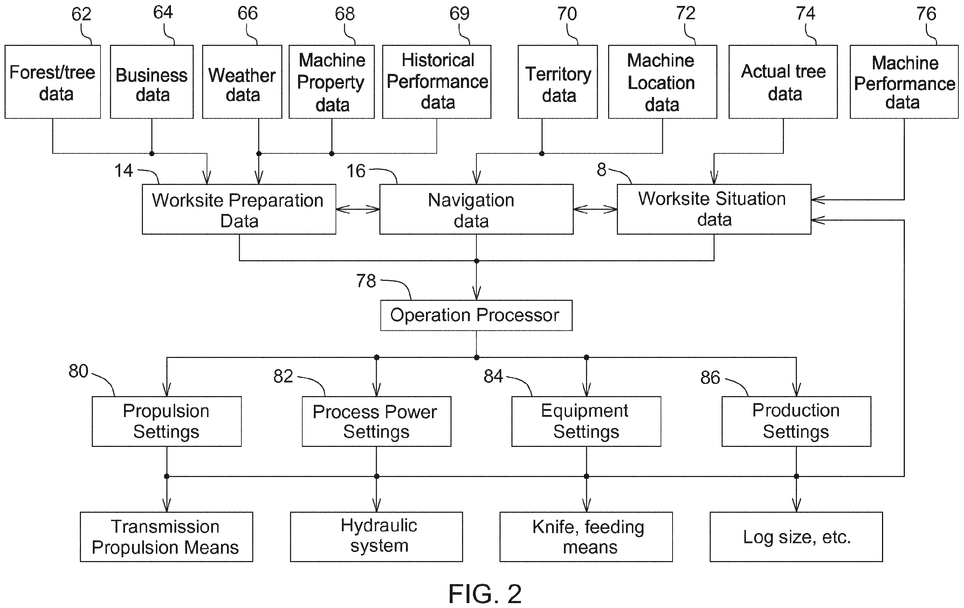

- Fig. 2: a diagram illustrating the interrelation of data and signals.

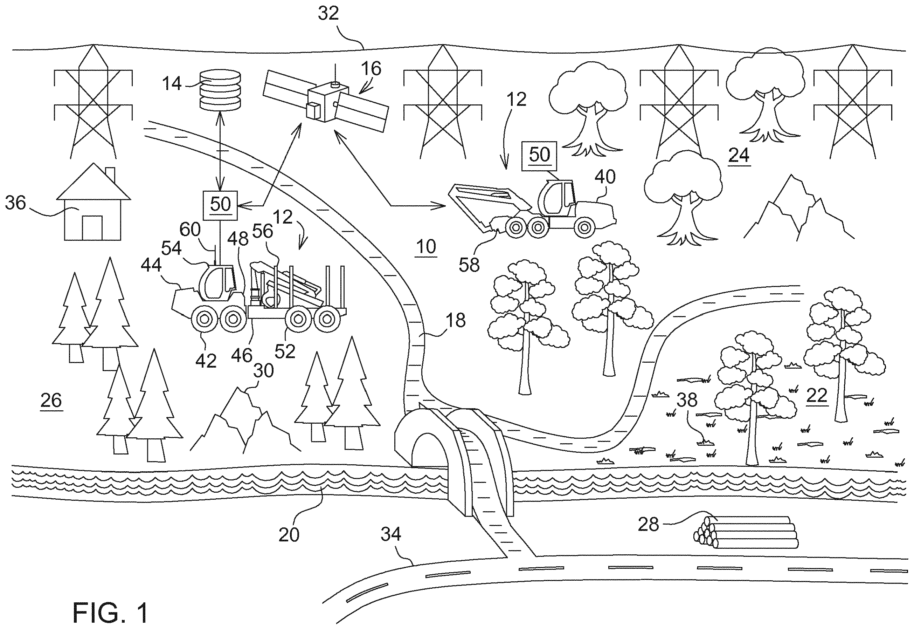

Figure 1 shows a worksite 10 at which different forestry machines 12 are operating using worksite preparation data 14, navigation data 16 and worksite situation data 8.

A typical worksite 10 is located in or close to the forest and has paths 18, creeks 20, areas 22, 24, 26 of trees of different species, landing places 28, rocks 30, power lines 32, streets 34, buildings 36, swampland 38, just to name a few. Such worksite 10 may be of small or big size and is usually indexed in the navigation data 16 with most of its content, characteristics, borders, etc.

Forestry machines 12 may be in the kind of harvesters 40 (Cut-to-Length as well as Full-Tree) or forwarders 42, skidders, etc. But besides that also dozers, stump removers, planters, etc. may be found, which are not designated extra. Such forest machines 12 may be equipped with an engine 44, a drive assembly 46, a hydraulic assembly 48, an electronic control unit 50 to operate the main components, which may be propulsion means 52, like wheels and axles, a cab 54, a boom 56, a harvesting unit 58 and the like. Such forestry machines 12 are known per se.

The worksite preparation data 14 typically are available in the form of a database with information helpful to operate the forestry machines 12 - individually or as a fleet. These data help making decisions and adjustments of the forestry machines 12 or the composition of the fleet before, but also during the operation. The worksite preparation data 14 may be located away from the worksite 10 and are continuously updated with new information. The information may be provided to the forestry machines 12 online or by a transferable data source, like an USB stick or the like. Such data may be:
a) Forest data 62 about the kind of trees (species, size, age, shape, stiffness, weight, amount, diseases, ground wetness, coverage with snow, tree deceases, tree shape, underwood, etc.) at the worksite 10, known from watching the forest like with cameras, drones. LIDAR, human beings, etc.
b) Business Data 64, like requirements of the purchaser or owner of the trees, sales prizes, traffic data, fleet data, etc.
c) Weather data 66, like actual weather, weather forecast, conditions on the ground, etc.
d) Machine property data 68, like the hp range, lift capacity, equipment, e.g. one or two saws, multi tree grapple or not, etc.
e) Historical performance data 69 from earlier machines, which could help setting and choosing forestry machines 12 e.g. in similar worksites 10.

The navigation data 16 contain plenty of territory data 70, like the borders of the worksite 10, the course of the paths 18, creeks 20 and power lines 32, the location of the rocks 30 and buildings 36, as well as the landing places 28, swampland 38, the tree areas 22 to 26 but also soil data. The navigation data 16 include also location data 72 about the current location and potentially past location of the forestry machines 12 and/or logs. Navigation data 16 may be aggregated data of current and previous worksite operations. The navigation data 16 is helpful in steering the forestry machines 12 to, at and from the worksite 10, whereas the forestry machines 12 are provided with antennas 60, in order to receive and send location data 72. Navigation data comprises also measurements (CAN etc) and sensing results (imaging, LIDAR etc.) from any machine visiting the same location - this information accumulates during operation. Information is shared between machines, updates / gets more resolution and precision (due to higher number of visiting times / and sensors). Navigation data is common near real-time and kept up-to-date during operation.

The worksite situation data 8 are data, which are not collected in advance but are captured during operation, like actual tree data 74 and machine performance data 76. Actual tree data 74 may be bends, strong branches, rotten portions, etc. detected by a camera and machine data are all kinds of data, like hydraulic pressure, inclination, speed, temperature, fuel consumption, steering angle, etc. Worksite situation data 8 could also come from the whole log logistics chain - e.g. if a log truck is delayed or other bottlenecks in chain could activate a mode to save fuel. So, the whole logging chain real-time parametrization could happen at same moment. Individual machine real-time adaptation/optimization is based on all information sources enabling adaptation/optimization computing of output signals in one or more machine processors. Sources can be e.g. navigation data, machine performance, operation conditions/environment, production/productivity, etc. During operation at the worksite 10, gathered and processed worksite situation data 8 can be shared among other forestry machines 12. Once shared, worksite situation data 8 and resulting processed outputs become available as common navigation data 16 and machine performance optimization data acting as sources for other forestry machines 12. All data may be used, to influence the operation of the forest machine 12 in order to reduce fuel consumption, achieve a higher output of log, prevent damages at the knives, etc.

These worksite preparation data 14, navigation data 16 and worksite situation data 8 are the input to an operation processor 78, which runs one or more routines to create output signals to valves, switches, controls etc. to adjust propulsion settings 80, like transmission gear, speed, deceleration, etc., to process power settings 82, like lift capacity of a boom, saw speed, feed wheel speed, etc.to equipment settings 84, like use of lower knives or not, use of a top saw or not, knife pressure, etc. and to production settings 86, like log length. The operation processor 78 may be provided physically on any of the forestry machines 12 as well as in the cloud or a connected server. These routines execute the forestry machinery operation method. All these setting have an impact on fuel consumption, machine output, wear on the components, etc. and may be optimized as such or all together. The operation processor 78 is preferably part of the electronic control 50 materialized in an onboard computer.

As worksite preparation data and navigation data are available before operation starts, the configuration of the forestry machine 12 and the selection of the right one may happen pre-operation, whereas worksite situation data 8 will be used during operation.

The following are some examples of control through the operation processor 78. E.g., adjustments may happen at:
a) the engine 44, where different power-torque lines may be followed, depending on the circumstances expected, like hard wood treatment vs. bulk wood;
b) the propulsion means 52, where minimum and maximum pressures in the hydraulic drives may be set depending on certain operation circumstances, like loading or driving a forwarder 42, etc.
c) the choice of the equipment, e.g. forwarders 42 with a small loading capacity may be used in swampland 38, whereas those with a big load space are planned for more dry and level areas. Also, harvesters 40 with top and bottom saw may be directed to tree areas with trees having many bends. Harvesters 40 having a multi-tree or bio-energy equipment on their harvester unit 58 may be directed to certain tree areas 22 - 26 if needed.

Control of the forestry machines 12 happens via their electronic control unit 50 located in the cab 54 or elsewhere, whereas the electronic control units 50 of several forestry machines 12 may connect to each other to build a network, the operation processor 78 being part of the electronic control unit 50. The control of the forestry machines 12 may happen remotely from a control station, directly by an operator on the forestry machine 12 itself, or as a mix of both, in which an advanced adjustment happens remotely, but fine-tuning happens by a local operator depending on the circumstances found.

While the various data are shown in individual boxes, it is also clear, that this is only an attempt, to classify them, but there is a constant exchange and update of data in the boxes by data and information in the other boxes, like between the worksite preparation data 14, the navigation data 16 and the worksite situation data 8.

Based on the description above, the following are examples of improved machine operation due to the application of the forestry machinery operation method.
A) At worksite preparation phase collected image-data shoes that the worksite 10 to be started includes mostly big trees with thick branches. Automatically the settings of the harvester 40 starting to cut that site will be set to the highest power model, in which the engine 44 has a high torque. Similarly, if the trees were small and with thin branches, the settings would be set accordingly to use less power. This is an impact on process power settings 82.
B) Harvester 40 grabs a stem and through image processing it is noticed that although the tree diameter is small, there are some really thick branches on it. Hence, the processing power level will be set to level "high" for that specific stem to ensure smooth processing of that stem, and returned back to normal level after that stem. This is also an impact on process power settings 82.
C) Harvester 40 grabs a stem and after fell-cut starts to feed it. The bucking instructions, combined with the estimated stem profile, predicts that three saw logs could be received from that stem with a length of 5.2 m each, and this will be indicated to the operator through an operation user interface. However, image data processing recognizes that there is a bad bent at the stem at the height of 9 m and stem part between 9.0 and 9.4m is not valid for saw log quality requirements. Based on this information the bucking is changed and two saw logs with lengths of 4.6 and 4.3 m are proposed to be cut before the bent part of the stem. This is an impact on production settings 86.
D) A forwarder 42 on a worksite has a load space full of logs and starts to drive towards the landing place 28 next to the street 34 along certain pathes 18 through the worksite 10. Measurement data from that forwarder 42 indicates, that the load of the engine 44 at a certain part of that path 18 and/or street 34 will be high and the driving conditions will be tough. Before hitting that place, adaptive driveline control settings will be switched to a high level to ensure there is enough power to go through that tough part of the path 18 and/or street 34 efficiently. Similarly, if conditions are known to be easy, the settings of the drive assembly would be set to an Eco Mode with better fuel economy for easy conditions. This is an impact on propulsion settings 80.

If above settings would be made by an operator, they would be reactive only to the conditions already found. Through the automatic forestry machinery operation method described, the settings of the forestry machine 12 could be adjusted to the situation proactively, i.e. in advance.

## Claims

1. Forestry machinery operation method, the machine operation comprising harvesting and/or transporting timber units with forestry machines 12 suitable for harvesting and/or transporting, the method comprising processing in an operation processor 78 data retrieved from information sources of following types:
a) Worksite preparation data 14, in the case of harvesting at least one of assortment data and assortment deviation data of the worksite 10, GIS-data and weather forecast data and in the case of transporting at least one of current production inventory status data on worksite 10, GIS-data, weather forecast data and data from other vehicles on the worksite;
b) Navigation data 16, at least one of location, heading, inclination, terrain, tree and timber unit location data,
c) Worksite situation data 8, at least one of surrounding timber data, ground condition and weather data by using sensors, including onboard cameras or other imaging systems,
whereas,
d) data processing in the operation processor 78 results in signals setting operation parameters of the forestry machine 12 and its equipment optimizing either or a combination of minimum fuel consumption, minimum wear on selected tools, maximum timber unit quality or maximum productivity.

2. Operation method according to claim 1, whereas worksite preparation data 14 refer to the size, hardness and species of tree to be harvested and power setting signals generated by the operation processor 78 are suitable to handle trees according to the expected performance level.

3. Operation method according to claim 1 and/or 2, whereas the work site situation data 8 refer to hints about irregular power needs, like a big branch on a small tree, and signals to process power settings 82 generated by the operation processor 78 are to handle trees according to the irregular performance level.

4. Operation method according to one or more of claims 1 to 3, whereas work site situation data 8 refer to hints about irregular shape of the timber impacting the process quality or quantity, like a bent in a straight tree, and signals to the production settings 86 generated by the operation processor 78 are suitable to process the trees considering the irregular shape.

5. Operation method according to one or more of claims 1 to 4, whereas work site situation data 8 refer to the load for moving logs over a terrain and information from the navigation data 16 or another forestry machine 12 on the worksite indicate a rise in transportation power need at a certain portion of the route, and signals to the propulsion setting 80 generated by the operation processor 78 are suitable to generate sufficient transport power before arriving at said portion of the route.

6. Operation Processor 78 suitable for running a forestry machinery operation method getting input from worksite preparation data 14, navigation data 16 and worksite situation data 8.
